# FASCICULE DE BREVET EUROPEEN

(11) **EP 1 517 509 B1**
(45) Date de publication et mention de la délivrance du brevet: **14.11.2007**
(21) Numéro de dépôt: 04077454.9
(22) Date de dépôt: 02.09.2004
(51) Int. Cl.: H04L 29/06

(54) **Insertion d'une aide dans une réponse à une requête pour bureau virtuel**
Einfügung einer Hilfe in eine Antwort zu einer Nachfrage an ein virtuelles Büro
help insertion in a reply to a request for a virtual office

(30) Priorité: 18.09.2003 FR 0310998
(43) Date de publication de la demande: 23.03.2005
(73) Titulaire: FRANCE TELECOM, 75015 Paris (FR)
(72) Inventeur: Gilbert, Arnaud, 22700 Perros Guirec (FR)
(74) Mandataire: Cabinet Martinet & Lapoux

(56) Documents cités:
- FR-A- 2 809 255
- US-A1- 2002 052 934
- US-A1- 2002 065 710
- US-A1- 2002 188 666
- US-A1- 2002 194 262
- JIUNG-YAO HUANG ET AL: "SharedWeb-a shared virtual environment over World Wide Web" COMPUTER GRAPHICS AND APPLICATIONS, 1997. PROCEEDINGS., THE FIFTH PACIFIC CONFERENCE ON SEOUL, SOUTH KOREA 13-16 OCT. 1997, LOS ALAMITOS, CA, USA,IEEE COMPUT. SOC, US, 13 octobre 1997 (1997-10-13), pages 178-189, XP010250248 ISBN: 0-8186-8028-8

## Description

La présente invention concerne un procédé pour insérer une aide textuelle et/ou audio et/ou vidéo pour un usager dans une réponse à une requête transmise par un terminal d'usager à travers un réseau de télécommunications.

Des applications de bureau virtuel sont actuellement proposées à des usagers à travers l'internet. Une application de bureau virtuel est un espace de travail complexe regroupant des applications notamment bureautiques au sein d'une seule application. Ces applications sont par exemple un agenda, une boîte aux lettres, un carnet d'adresse, un outil collaboratif, etc.

Des prestataires mettent à disposition des applications de bureaux virtuels, généralement spécifiques au métier de l'usager, par l'intermédiaire de serveurs de bureau virtuel connectés au réseau de télécommunications.

Il est très difficile pour un usager d'appréhender toutes les fonctionnalités offertes par un bureau virtuel. Le coût important d'une formation à une application de bureau virtuel n'est souvent pas envisageable par l'usager.

Habituellement des aides textuelles sont mises à disposition de l'usager dans l'application de bureau virtuel. Ces aides textuelles décrivent le fonctionnement et les possibilités de l'application de bureau virtuel.

Certains prestataires d'application de bureau virtuel proposent des aides plus interactives, comme une aide par questions/réponses, une assistance téléphonique ou une assistance numérique. L'aide par questions/réponses propose à un usager de transmettre une question via un formulaire au prestataire du bureau virtuel, afin que celui-ci ou une personne spécialisée réponde à l'usager. Ces aides et ces assistances sont très onéreuses parce qu'elles requièrent une action humaine de la part d'un personnel qualifié.

L'assistance numérique dans le domaine internet consiste en l'insertion d'un assistant virtuel représenté souvent par un personnage ou compagnon virtuel dans des pages hypertextuelles HTML (Hypertext Transfert Markup Language). Le personnage virtuel propose à l'usager une aide textuelle ou audio en rapport avec le contenu de la page. De plus, l'insertion d'un assistant numérique est spécifique aux matériels et aux logiciels utilisés par les serveurs des prestataires.

Selon la demande de brevet US 2002/0065710 A1, un serveur d'aide sélectionne des terminaux d'aide pour fournir une réponse à une requête d'un terminal d'usager. A la réception de la requête, le serveur d'aide mémorise le numéro d'usager, sélectionne une liste de terminaux d'aide notamment en fonction de mots clés extraits de la requête et dont les capacités de communication sont compatibles avec celles du terminal d'usager et mémorise les numéros des terminaux sélectionnés auxquels la requête est transmise. Puis le serveur d'aide recherche un historique de réponses à des requêtes antérieures similaires à la requête présente afin de créer et mémoriser une liste de terminaux d'aide en fonction des messages de réponse des terminaux interrogés et d'exemples de réponse passée. Les messages de réponse sont saisis par des assistants dans les terminaux d'aide interrogés. Le serveur d'aide transmet alors la liste de terminaux d'aide au terminal d'usager, et l'usager du terminal sélectionne un terminal d'aide. Le serveur d'aide gère la session entre le terminal d'usager et le terminal d'aide sélectionné.

La liste de terminaux ainsi créée résulte d'une interrogation des terminaux pour connaitre leurs capacités de communication et leurs tarifications. Le serveur d'aide propose à l'usager une liste de terminaux d'aide afin que l'usager poursuive une session avec seulement un terminal sélectionné dans la liste proposée, sans aucune interaction entre des requêtes de l'usager destinées à plusieurs terminaux d'aide.

L'objectif de la présente invention est d'insérer automatiquement dans une réponse d'un serveur d'application à une requête transmise par un terminal d'usager, une aide adaptée à des requêtes récentes de l'usager, indépendamment du matériel et du logiciel du serveur d'application.

Pour atteindre cet objectif, un procédé pour insérer une aide pour un usager dans des réponses de plusieurs applications implémentées dans un moyen serveur à des requêtes successives transmises par un terminal d'usager à travers un réseau de télécommunications, est caractérisé en ce qu'il comprend dans un moyen d'aide connecté au terminal d'usager les phases suivantes d'une étape d'application récurrente après réception d'une requête :
mémorisation d'un identificateur de l'usager et d'un identificateur de l'étape extraits de la requête désignant une action requise par l'usager à exécuter par l'une respective des applications dans le moyen serveur,
analyse de listes d'actions précédemment requises par l'usager afin de recommander dans les applications une liste d'actions associées respectivement à des identificateurs d'étape et la mémoriser en correspondance à l'identificateur d'usager,
transmission de la requête à l'application respective qui exécute l'action requise associée à l'identificateur de l'étape et élabore une réponse transmise au moyen d'aide,
incorporation d'une aide incluant la liste d'actions recommandées dans la réponse, et
transmission de la réponse incorporant l'aide au terminal d'usager afin que l'usager sélectionne une autre action dans la liste d'actions recommandées.

Grâce à l'analyse des textes d'actions précédemment requises par l'usager, la liste d'actions recommandées incluse dans l'aide transmise au terminal d'usager est adaptée à l'usager sans être dépendant du moyen serveur implémentant les applications.

L'invention concerne également un moyen d'aide, par exemple un serveur d'aide, pour la mise en oeuvre de l'insertion d'aide selon l'invention. Il comprend :
un moyen pour mémoriser un identificateur de l'usager et un identificateur d'une étape d'application extraits d'une requête transmise par le terminal d'usager et désignant une action requise par l'usager à exécuter par l'une respective des applications dans le moyen serveur, la requête étant transmise à l'application respective qui exécute l'action requise associée à l'identificateur de l'étape et élabore une réponse transmise au moyen d'aide,
un moyen pour analyser des listes d'actions précédemment requises par l'usager afin de recommander dans les applications une liste d'actions associées respectivement à des identificateurs d'étape et la mémoriser en correspondance à l'identificateur d'usager, et
un moyen pour incorporer une aide incluant la liste d'actions recommandées dans la réponse qui est transmise au terminal d'usager afin que l'usager sélectionne une autre action dans la liste d'actions recommandées.

D'autres caractéristiques et avantages de la présente invention apparaîtront plus clairement à la lecture de la description suivante de plusieurs réalisations préférées de l'invention, à titre d'exemples non limitatifs, en référence aux dessins annexés correspondants dans lesquels :
- la figure 1 est un bloc-diagramme schématique d'un système d'aide mettant en oeuvre le procédé pour insérer automatiquement une aide dans une réponse à une requête, selon une réalisation préférée de l'invention ; et
- la figure 2 est un algorithme du procédé d'insertion selon la réalisation préférée de l'invention, montrant les phases principales d'une étape d'application à la suite d'une requête d'usager.

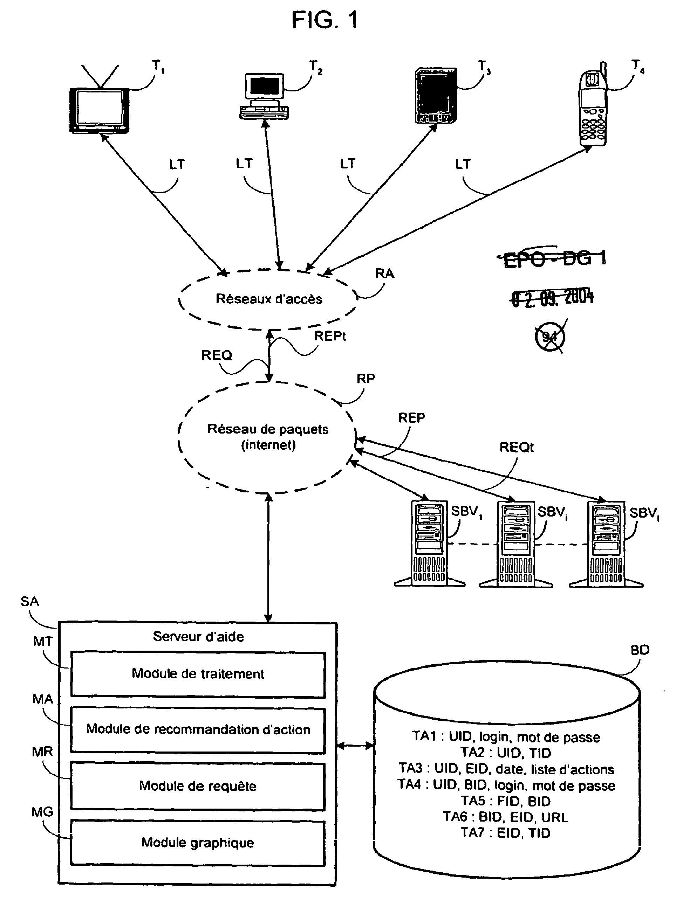

Le système d'aide mettant en oeuvre le procédé pour insérer une aide selon la réalisation préférée est basé sur une architecture du type client-serveur. Il comprend principalement, en référence à la figure 1, plusieurs terminaux d'usager interactifs T, au moins un serveur d'aide SA, une base de données BD, et des serveurs de bureau virtuel SBV₁ à SBV_{I}.

Un usager accède à un service d'aide et plus généralement à un ensemble d'applications disposant d'une aide ou d'un assistant en se connectant directement au serveur d'aide SA au moyen d'un terminal d'usager interactif T. Selon la réalisation illustrée à la figure 1, un terminal d'usager T₁ est par exemple du type récepteur de télévision intelligent. Le récepteur de télévision T₁ coopère avec une télécommande à afficheur et clavier alphanumérique servant également de souris à travers une liaison infrarouge. En variante, la télécommande est complétée par un clavier plus complet sans fil relié par liaison radioélectrique de proximité au téléviseur.

D'autres terminaux domestiques portables ou non sont envisageables tels que micro-ordinateur, téléphone, console de jeux vidéo, etc. Le terminal T est desservi par une liaison de télécommunications LT et un réseau d'accès RA, tels qu'une ligne téléphonique et le réseau téléphonique commuté, pour être connecté à un réseau de transmission de paquets à haut débit RP du type internet auquel est relié le serveur d'aide SA.

Selon un autre exemple, le terminal d'usager T₂ est un ordinateur personnel relié directement par modem à la liaison LT. Selon d'autres exemples, le terminal d'usager T₃ comprend un dispositif ou objet électronique de télécommunications personnel à l'usager qui peut être un assistant numérique personnel PDA, ou bien comprend un poste radio intelligent à la place du récepteur de télévision T₁, les deux types de récepteur pouvant coexister.

La liaison de télécommunications LT peut être une ligne xDSL (Digital Subscriber Line) ou une ligne RNIS (Réseau Numérique à Intégration de Services) reliée au réseau d'accès correspondant.

Selon encore un autre exemple, le terminal T₄ est un terminal de radiocommunications cellulaire mobile, la liaison de télécommunications LT est un canal de radiocommunications, et le réseau d'accès RA est le réseau fixe d'un réseau de radiocommunications, par exemple de type GSM (Global System for Mobile communications) de préférence avec un service GPRS (General Packet Radio Service), ou de type UMTS (Universal Mobile Telecommunications System).

Les terminaux d'usager et les réseaux d'accès ne sont pas limités aux exemples ci-dessus illustrés à la figure 1 et peuvent être constitués par d'autres terminaux et réseaux d'accès connus. Tous les terminaux sont dotés d'un navigateur web dans la réalisation préférée.

Dans le cadre de la description, une tâche est un objectif sélectionné par un usager qui est atteint par une succession d'étapes d'application composées chacune d'une unique action sélectionnée dans une liste d'actions recommandées associée à l'étape. Les étapes se succèdent au gré de l'usager suivant une arborescence dynamique de listes d'actions dépendant chacune de l'action sélectionnée par l'usager dans l'étape précédente. Une action incluse dans une liste d'actions recommandées à l'étape précédente peut être également incluse dans la liste d'actions recommandées de l'étape suivante. Le nombre d'étapes dans une tâche est variable en fonction de l'objectif à atteindre par l'usager, et les étapes d'une tâche peuvent appartenir à diverses applications.

Une action est désignée généralement par une phrase en langage naturel, et une étape est désignée par un titre évocateur de l'action sélectionnée à la fin de l'étape précédente.

Une action est représentée bien souvent par un lien hypertextuel, ou plus généralement hypermédia, pour accéder à l'étape suivante.

Par exemple, un usager sélectionne une tâche "Je souhaite téléphoner". Cette tâche commence par une première étape associée à une liste d'actions telles que :
"J'ouvre mon répertoire d'adresse",
"Je compose un numéro de téléphone",
"Je consulte mes messages".
L'usager sélectionne l'action "J'ouvre mon répertoire d'adresse". Cette action déclenche l'exécution d'une deuxième étape "Mon répertoire", à laquelle est associée une liste d'actions recommandées présentées à l'usager :
"J'ajoute un nouveau contact",
"Je supprime un contact",
"J'appelle quelqu'un",
"J'écris à quelqu'un".

Une troisième étape succède à la deuxième étape pour recommander une autre liste d'actions qui peut inclure l'une des actions déjà recommandées dans les première et deuxième étapes précédentes.

Le serveur d'aide SA comprend pour la mise en oeuvre de l'invention notamment un module de traitement MT, un module de recommandation d'action MA, un module de requête MR et un module graphique MG.

Chacun des serveurs de bureau virtuel SBV₁ à SBV_{I} contient au moins une application de bureau virtuel accessible au serveur d'aide SA à travers le réseau de paquets RP et incluant au moins une action.

La base de données BD comporte notamment sept tables TA1 à TA7.

La table TA1 fait correspondre des identificateurs d'usager UID à des informations personnelles sur l'usager. Les informations personnelles de l'usager sont du type login, mot de passe, et nom et/ou prénom et profil de l'usager. Le login et le mot de passe ont été assignés préalablement à l'usager lors de son abonnement au service d'aide et identifient l'usager auprès du serveur d'aide SA afin que l'usager accède au service d'aide dispensé par le serveur d'aide.

La table TA2 associe au moins un identificateur d'usager UID à au moins un identificateur de tâche TID. Un usager peut choisir plusieurs tâches simultanément, et la table TA2 associe alors l'identificateur UID à plusieurs identificateurs de tâche TID.

La table TA3 fait correspondre au moins un identificateur d'usager UID à au moins un identificateur d'étape EID, une adresse URL (Uniform Locator Resource) et une date. Un champ "liste d'actions" est également disponible dans la table TA3 afin d'y mémoriser des actions recommandées à chacune des étapes à l'usager. Au libellé en langage naturel de chaque action est associé l'identificateur EID d'une étape suivante qui pourra être sélectionnée par l'usager et signalée dans une requête au serveur d'aide SA afin que cette étape suivante soit exécutée. La table TA3 contribue à la traçabilité de l'usager selon les actions successives qu'il a sélectionnées. A chaque requête REQ transmise par le terminal T de l'usager correspond un enregistrement dans la table TA3, appelé "trace", incluant notamment l'identificateur d'usager UID, l'identificateur d'étape EID correspondant à l'action qui vient d'être sélectionnée par l'usager, la date courante de réception de la requête et une liste d'actions correspondant à l'identificateur d'étape EID et à présenter à l'usager.

La table TA4 associe au moins un identificateur d'usager UID à des paramètres de connexion sur au moins une et en général plusieurs applications de bureau virtuel auxquelles l'usager correspondant est autorisé à accéder lors de son abonnement au service d'aide. Les paramètres de connexion relatifs à une application de bureau virtuel spécifiques à un usager sont au moins un identificateur BID de l'application de bureau virtuel, et un login et un mot de passe associés à l'application de bureau virtuel correspondante. Ainsi, des couples de login et de mot de passe de l'usager sont respectivement associés à des identificateurs BID d'applications de bureau virtuel auxquelles l'usager a souscrit. Ces informations sont préalablement renseignées par un prestataire de service lié au serveur d'aide SA, lors de l'abonnement de l'usager au service d'aide. Un usager peut accéder de façon transparente à travers le serveur d'aide SA à plusieurs serveurs de bureaux virtuels et donc à plusieurs applications de bureau virtuel réparties dans les serveurs SBV₁ à SBV_{I} pour ainsi profiter des fonctionnalités spécifiques de chaque application de bureau virtuel.

La table TAS fait correspondre un identificateur d'application de bureau virtuel BID à un identificateur FID d'une feuille de style définissant notamment des paramètres de la présentation d'une liste d'actions.

La table TA6 fait correspondre chaque couple d'identificateur BID d'une application de bureau virtuel et d'identificateur EID d'une étape de cette application à une adresse URL (Uniform Resource Locator) de ladite étape selon un chemin dans l'application et fonction d'une adresse du serveur de bureau virtuel implémentant ladite application. La table TA6 liste toutes les étapes existantes dans les applications de bureau virtuel. Cette table est remplie préalablement soit manuellement, soit par un moteur d'indexation de ressources.

Les informations UID, EID, date et liste d'actions recommandées dans un enregistrement de la table TA3 et l'adresse URL associée à l'identificateur d'étape EID dans la table TA6 constituent une trace de requête pour l'usager désigné par l'identificateur UID.

La table TA7 associe chacun des identificateurs d'étapes EID à un identificateur de tâche TID et à un ordre d'étapes de tâche. L'ordre définit l'ordonnancement des étapes dans la tâche.

Dans une première variante, le module de recommandation MR est dans un serveur de recommandation relié au réseau de paquets. Le serveur d'aide SA accède alors au serveur de recommandation par le réseau de paquets RP.

Dans une deuxième variante, chaque serveur de bureau virtuel SBVᵢ comporte des modules assurant les fonctionnalités du serveur d'aide SA et de la base de données BD. Un terminal usager T accède alors directement à un serveur de bureau virtuel SBVᵢ à travers un réseau de télécommunications comprenant le réseau d'accès associé RA et le réseau de paquets RP.

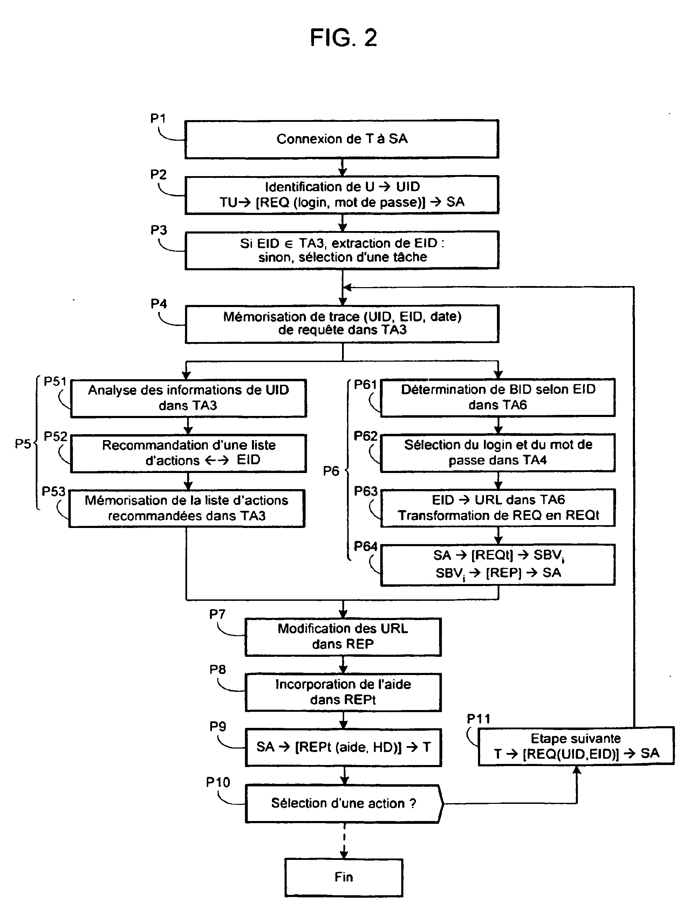

Le procédé d'insertion automatique d'une aide dans une réponse à une requête comprend principalement les phases P1 à P11 montrées à la figure 2 selon la réalisation préférée de l'invention.

Le procédé d'insertion d'aide débute par l'ouverture d'une session après une connexion du terminal T de l'usager au serveur d'aide SA à la phase P1.

Au début de la phase P2 relative à l'identification de l'usager du terminal, le module de traitement MT transmet au terminal T un message invitant l'usager à saisir sur le terminal T son login et son mot de passe qui sont transmis dans une requête initiale au serveur d'aide SA. Le module de traitement vérifie ensuite la présence d'un enregistrement dans la table TA1 comprenant le login et le mot de passe contenu dans la requête du terminal usager. Lorsqu'un enregistrement est trouvé dans la table TA1, l'usager est identifié et l'identificateur UID de l'usager identifié est alors connu. Dans le cas contraire, l'usager n'est pas identifié et n'est donc pas autorisé à accéder au service d'aide.

A la phase P3, si l'usager a déjà utilisé le service d'aide, et donc si la table TA3 contient au moins un enregistrement correspondant à l'identificateur UID et à une action sélectionnée au cours d'une étape précédente d'une tâche, le module de traitement MT consulte la table de mémoire TA3 afin d'extraire l'identificateur d'étape EID de la dernière étape sélectionnée par l'usager. Lorsqu'aucun enregistrement ne correspond à l'identificateur d'usager UID dans la table TA3, le module de traitement MT sélectionne dans la table TA7 une liste prédéterminée d'identificateurs de tâche TID qui est transmise au terminal T de l'usager pour qu'il sélectionne une tâche.

En variante des piles du type LIFO (Last In First Out) sont utilisées afin d'augmenter la rapidité d'accès aux données. Une pile contient des informations sur la dernière étape réalisée par un usager, en faisant correspondre un identificateur d'étape EID à un identificateur d'usager UID. La phase P3 est alors réalisée avec la pile et non plus avec la table de mémoire TA3.

Le module de traitement MT mémorise dans la table TA3 à la phase P4, une trace qui est composée de l'identificateur d'usager UID, l'identificateur EID de la dernière étape sélectionnée par l'usager et de la date courante et récupère dans la table TA6 l'adresse URL correspondant à l'identificateur EID de la dernière étape associée à la dernière action sélectionnée.

Comme on le verra dans la suite de la description, la phase P4 concerne de manière récurrente dans la session le début de toute étape d'application composée des phases P4 à P10 ultérieure à une première étape au début de la session courante et extrait des identificateurs UID et EID d'une requête REQ transmise par le terminal d'usager à la suite d'une action sélectionnée par l'usager.

Après la phase P4, deux traitements sont effectués en parallèle à des phases P5 et P6 comprenant respectivement des sous-phases P51 à P53 et P61 à P64.

Dans le premier traitement P5, le module de recommandation d'action MA analyse les traces de requêtes précédentes en correspondance avec l'identificateur d'usager UID dans la table TA3 à la sous-phase P51. Le module de recommandation MA dispose de la table TA6 dans laquelle sont mémorisées toutes les actions possibles d'une application de bureau virtuel en correspondance avec un identificateur d'application de bureau virtuel BID, un identificateur d'étape EID et une adresse URL, ainsi que par exemple des données statistiques sur cette action. Cette analyse prend spécialement en compte l'identificateur EID de la dernière étape sélectionnée par l'usager, mémorisé à la phase P4. Le module de recommandation MA compare au cours de l'analyse un nombre prédéterminé maximum d'étapes récentes empruntées par l'usager et analyse les actions recommandées et particulièrement sélectionnées par l'usager au cours de ces étapes récentes, afin par exemple de déterminer des actions recommandées en dépendance de besoins effectifs de l'usager. Les besoins de l'usager sont déterminés en fonction du profil de l'usager lu notamment dans la table TA2.

Grâce à cette analyse, le module de recommandation MA ayant pré-mémorisé un profil de l'usager lors de l'abonnement de celui-ci recommande une liste d'actions adaptées à l'usager à la sous-phase P52. Par exemple, lorsque l'usager n'utilise plus le service d'aide mais seulement l'application de bureau virtuel, le module de recommandation MA change les actions qu'il recommande. Le module de recommandation s'appuie par exemple sur des analyses statistiques pour prédire les actions recommandées à l'étape en cours.

A la sous-phase P53, le module de recommandation mémorise dans la table TA3 la liste des actions recommandées par le module de recommandation MA en association avec le couple formé par l'identificateur d'usager UID et l'identificateur d'étape EID mémorisés à la phase P4. Le libellé de chaque action est lié à un hyperlien, c'est-à-dire à une adresse URL incluant l'adresse du serveur d'aide SA et l'identificateur EID d'une prochaine étape potentielle respective.

A la sous-phase P61 dans le deuxième traitement P6, le module de traitement MT détermine dans la table TA6 l'identificateur d'application de bureau virtuel BID correspondant à l'identificateur EID de la dernière étape sélectionnée par l'usager, mémorisé à la phase P4 et inclus dans la requête reçue REQ.

A la sous-phase P62, le module de traitement sélectionne dans la table TA4 le login et le mot de passe de l'usager spécifiques pour l'application de bureau virtuel respective correspondant à l'identificateur BID déterminé à la sous-phase précédente P61 et associé à l'identificateur d'usager UID. L'identification de l'usager demandée par le serveur d'aide SA auprès de l'un SBVᵢ des serveurs de bureau virtuel est transparente pour l'usager.

Le module de requête MR transforme la requête REQ de l'usager en une requête transformée REQt, à la sous-phase P63, avant la transmission de la requête REQt. Cette transformation comporte deux parties. La première partie consiste à incorporer dans la requête REQ les paramètres de connexion constitués par le login et le mot de passe sélectionnés à la sous-phase précédente P62, afin que celle-ci dans le serveur de bureau virtuel SBVᵢ correspondant à l'identificateur BID déterminé à la sous-phase P61 identifie l'usager en fonction des paramètres de connexion.

A la deuxième partie de la sous-phase P63, le module de requête MR sélectionne l'adresse URL de l'étape dont l'identificateur EID est inclus dans la requête REQ de l'usager, dans la table TA6 afin d'introduire également cette adresse URL, en tant qu'adresse de destinataire incluant l'adresse de l'application associée à l'étape, dans la requête.

A la sous-phase P64, le serveur d'aide SA envoie une requête d'usager transformée REQt incluant des paramètres de connexion et l'adresse d'étape à l'application dans le serveur de bureau virtuel SBVᵢ correspondant à l'adresse de destinataire. Le serveur SBVᵢ exécute ainsi l'action désignée par l'identificateur d'étape EID inclus dans la requête REQt.

Dans une variante, un champ d'adresse URL est ajouté dans la table TA4 afin d'y écrire une adresse d'identification d'usager URL fixée dans le serveur de bureau virtuel désigné par l'identificateur déterminé BID. Le module de requête MR transmet au serveur de bureau virtuel désigné une requête d'identification incluant le login et le mot de passe de l'usager vers l'adresse d'identification d'usager URL afin d'identifier l'usager. Le serveur SA reçoit une réponse à la requête d'identification et, lorsque le résultat de l'identification est positif, envoie au serveur de bureau virtuel une requête REQt vers l'adresse de destinataire URL de l'étape désignée par l'identificateur EID dans la requête REQ.

Le module de requête MR reçoit la réponse REP du serveur de bureau virtuel à la requête REQt et transforme la réponse REP en une réponse transformée REPt. Cette transformation se décompose en deux phases P7 et P8.

La phase P7 consiste à modifier toutes les adresses de localisation de ressource URL comprises dans la réponse REP du serveur de bureau virtuel SBVᵢ, afin que ces adresses URL soient remplacées par des adresses prédéterminées incluant l'adresse du serveur d'aide SA et ne se réfèrent plus ainsi au serveur de bureau virtuel SBVᵢ ou à tout autre serveur SBV₁ à SBV_{I} mais au serveur d'aide SA. Un tel remplacement d'adresse est connu de l'homme du métier et est utilisé dans des proxys.

Dans la réalisation préférée de l'invention, le bureau virtuel est affiché dans le terminal d'usager sous la forme d'une première fenêtre et l'aide sous la forme d'une deuxième fenêtre.

En variante plus simple, le module de requête MR ne modifie pas les adresses URL de la réponse REP.

A la phase P8, le module graphique MG incorpore une aide, incluant la liste d'actions recommandées à la phase P53, dans la réponse REP dont les adresses de localisation de ressources URL ont été modifiées pour produire la réponse transformée REPt. Chaque action incorporée dans la réponse REPt transmise au terminal d'usager T est sous la forme d'un libellé et d'une adresse de localisation de ressource URL comprenant l'adresse du serveur d'aide SA et l'identificateur EID d'une étape respective. L'aide est affichée dans la deuxième fenêtre selon la réalisation préférée. Lorsque la deuxième fenêtre n'existe pas, le module graphique MG insère dans la réponse du serveur de bureau virtuel un code désignant la deuxième fenêtre pour générer celle-ci dans le terminal T en incluant la liste des actions recommandées. Lorsque la deuxième fenêtre existe, le contenu de celle-ci n'est que réactualisé.

Afin de présenter le contenu de la deuxième fenêtre incluant la liste d'actions recommandées selon la même charte graphique que l'application de bureau virtuel correspondante, le module graphique MG sélectionne dans la table TA5 un identificateur FID de la feuille de style associé à l'identificateur d'application de bureau virtuel BID lu dans la requête REQ.

Dans une variante, la feuille de style dépend également de l'identificateur de la dernière étape sélectionnée par l'usager. Un champ d'identificateur d'étape est alors prévu dans la table TA5. A chaque étape, l'affichage de l'aide est différent.

Dans la réalisation préférée, la technologie utilisée pour la mise en forme de la liste d'actions est par exemple le langage XML (extensible Markup Language) couplé par exemple à des feuilles de styles XSL (extensible Stylesheet Language). Lorsque le contenu de la deuxième fenêtre doit être chargé par le terminal T de l'usager, le module graphique MG met en forme l'aide à transmettre au terminal avec la feuille de style associée à l'identificateur de feuille de style FID.

A la phase P9, le serveur d'aide SA transmet la réponse transformée REPt au terminal T de l'usager.

Puis à la phase P10, si l'usager sélectionne une zone active encadrant le libellé de l'une des actions recommandées de la liste incluse dans l'aide contenue dans la réponse transformée REPt et affichée dans la deuxième fenêtre à l'écran du terminal d'usager T, une autre requête REQ incluant l'identificateur d'usager UID et l'identificateur d'étape d'application EID associé à l'action recommandée sélectionnée est transmise au serveur d'aide SA à la phase P11. Le procédé est à nouveau poursuivi dans le serveur d'aide SA à partir de la phase de mémorisation de trace P4, en exécutant l'étape d'application désignée par l'identificateur EID extraite de la requête reçue REQ.

De même si l'usager sélectionne une zone active de la première fenêtre, une autre requête REQ incluant l'identificateur d'usager UID et l'identificateur d'étape d'application EID est transmise au serveur d'aide SA.

Si l'usager est satisfait de l'exécution des étapes précédentes, il peut finir la session à tout instant entre les phases P4 à P10, en commandant une déconnexion du terminal T du serveur d'aide SA.

La réalisation préférée de l'invention décrite ci-dessus concerne une aide pour une application de bureau virtuel. Cependant, l'invention concerne également l'insertion d'une aide pour des applications autres qu'une application de bureau virtuel, comme par exemple une application d'opérations bancaires ou de téléchargement.

L'invention décrite ici concerne un procédé et un moyen d'aide, tel que le serveur d'aide SA, pour insérer une aide pour un usager dans des réponses REP d'une application implémentée dans un moyen serveur SBV₁ - SBV_{I} à des requêtes REQ successives transmises par un terminal d'usager. Selon une implémentation préférée, les étapes du procédé sont déterminées par les instructions d'un programme d'aide incorporé dans un serveur d'aide, et le procédé selon l'invention est mis en oeuvre lorsque ce programme est chargé dans un ordinateur dont le fonctionnement est alors commandé par l'exécution du programme.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

## Revendications

1. - Procédé pour insérer une aide pour un usager dans des réponses (REP) de plusieurs applications implémentées dans un moyen serveur (SBV₁ - SBV_{I}) à des requêtes (REQ) successives transmises par un terminal d'usager (T) à travers un réseau de télécommunications (RA, RP), comprenant dans un moyen d'aide (SA) connecté au terminal d'usager les phases suivantes d'une étape d'application récurrente après réception d'une requête (REQ) :
mémorisation (P4) d'un identificateur (UID) de l'usager et d'un identificateur (EID) de l'étape extraits de la requête désignant une action requise par l'usager à exécuter par l'une respective des applications dans le moyen serveur (SBV₁ - SBV_{I}),
analyse (P51) de listes d'actions précédemment requises par l'usager afin de recommander (P52) dans les applications une liste d'actions associées respectivement à des identificateurs d'étape et la mémoriser (P53) en correspondance à l'identificateur d'usager (UID),
transmission (P64) de la requête (REQt) à l'application respective qui exécute l'action requise associée à l'identificateur (EID) de l'étape et élabore une réponse (REP) transmise au moyen d'aide,
incorporation (P8) d'une aide incluant la liste d'actions recommandées dans la réponse, et
transmission (P9) de la réponse (REPt) incorporant l'aide au terminal d'usager afin que l'usager sélectionne une autre action dans la liste d'actions recommandées.

2. - Procédé conforme à la revendication 1, selon lequel l'analyse (P51) de listes d'actions précédentes requises par l'usager dépend également d'un profil de l'usager pré-mémorisé dans le moyen d'aide (SA).

3. - Procédé conforme à la revendication 1 ou 2, comprenant avant la transmission (P64) de la requête, une sélection (P62) de paramètres de connexion spécifiques à l'application respective et préalablement mémorisés dans le moyen d'aide (SA), et une incorporation (P63) des paramètres de connexion dans la requête (REQt) transmise à l'application respective afin que celle-ci identifie l'usager du terminal en fonction des paramètres de connexion.

4. - Procédé conforme à l'une quelconque des revendications 1 à 3, comprenant avant la transmission (P9) de la réponse (REPt) incorporant l'aide au terminal (T), une modification (P7) d'adresses de localisation de ressource comprises dans la réponse (REP) afin que les adresses de localisation de ressources incluent une adresse du moyen d'aide (SA).

5. - Procédé conforme à l'une quelconque des revendications 1 à 4, selon lequel chaque action incorporée dans la réponse (REPt) transmise au terminal d'usager (T) est sous la forme d'un libellé et d'une adresse de localisation de ressource (URL) comprenant l'adresse du moyen d'aide (SA) et l'identificateur (EID) d'une étape respective

6. - Procédé conforme à l'une quelconque des revendications 1 à 5, selon lequel plusieurs applications incluant chacune au moins une action sont implémentées dans le moyen serveur (SBV₁ - SBV_{I}) et les identificateurs d'étape (EID) sont respectivement associés à des adresses d'application dans le moyen d'aide (SA), la requête transmise (REQt) incluant l'adresse de l'application respective qui exécute l'action associée à l'identificateur (EID) de l'étape.

7. - Procédé conforme à la revendication 6, selon lequel le moyen serveur comprend plusieurs serveurs (SBV₁-SBV_{I}) dans lesquels les applications sont réparties.

8. - Procédé conforme à la revendication 7, selon lequel chaque serveur (SBV₁ - SBV_{I}) comporte les fonctionnalités du moyen d'aide (SA).

9. - Moyen d'aide (SA) pour insérer une aide pour un usager dans des réponses (REP) de plusieurs applications implémentées dans un moyen serveur (SBV₁ - SBV_{I}) à des requêtes (REQ) successives transmises par un terminal d'usager (T) à travers un réseau de télécommunications (RA, RP), comprenant :
un moyen (MT, TA3) pour mémoriser un identificateur (UID) de l'usager et un identificateur (EID) d'une étape d'application extraits d'une requête (REQ) transmise par le terminal d'usager et désignant une action requise par l'usager à exécuter par l'une respective des applications dans le moyen serveur (SBV₁ - SBV_{I}), la requête (REQt) étant transmise à l'application respective qui exécute l'action requise associée à l'identificateur (EID) de l'étape et élabore une réponse (REP) transmise au moyen d'aide,
un moyen (MA, TA2, TA6) pour analyser des listes d'actions précédemment requises par l'usager afin de recommander dans les applications une liste d'actions associées respectivement à des identificateurs d'étape et la mémoriser (P53) en correspondance à l'identificateur d'usager, et
un moyen (MR, MG) pour incorporer une aide incluant la liste d'actions recommandées dans la réponse (REPt) qui est transmise au terminal d'usager afin que l'usager sélectionne une autre action dans la liste d'actions recommandées.

10. - Moyen d'aide conforme à la revendication 9, **caractérisé en ce que** le moyen serveur (SVB₁ - SVB_{I}) comprend plusieurs serveurs (SBV₁ - SBV_{I}) dans lesquels plusieurs applications incluant chacune au moins une action sont réparties, et **en ce qu'**il comprend un moyen (TA6) listant toutes les étapes existantes dans les applications pour faire correspondre chaque identificateur (EID) d'une étape dans une application à une adresse de ladite étape dans l'application fonction d'une adresse du serveur implémentant ladite application.

11. - Programme d'ordinateur comportant des instructions de programme adaptées à la mise en oeuvre d'un procédé selon l'une quelconque des revendications 1 à 8, lorsque ledit programme est chargé et exécuté dans un système informatique.

## Claims

1. Method for inserting help for a user in responses (REP) from several applications implemented in a server means (SBV₁ - SBV_{I}) to successive requests (REQ) transmitted by a user terminal (T) through a telecommunication network (RA, RP), comprising, in a help means (SA) connected to the user terminal, the following phases of a recurrent application step after receiving a request (REQ):
storage (P4) of a user identifier (UID) and an identifier (EID) of the step extracted from the request designating an action requested by the user to be executed by the respective one of the applications in the server means (SBV₁ - SBV_{I}),
analysis (P51) of lists of actions previously requested by the user in order to recommend (P52), in the applications, a list of actions respectively associated with step identifiers and store it (P53) in relation to the user identifier (UID),
transmission (P64) of the request (REQt) to the respective application which executes the requested action associated with the identifier (EID) of the step and generates a response (REP) transmitted to the help means,
incorporation (P8) of help including the list of actions recommended in the response, and
transmission (P9) of the response (REPt) incorporating the help to the user terminal in order for the user to select another action from the list of recommended actions.

2. Method according to Claim 1, according to which the analysis (P51) of lists of preceding actions requested by the user also depends on a profile of the user pre-stored in the help means (SA).

3. Method according to Claim 1 or 2, comprising, before the transmission (P64) of the request, a selection (P62) of connection parameters specific to the respective application and previously stored in the help means (SA), and incorporation (P63) of the connection parameters in the request (REQt) transmitted to the respective application in order for the latter to identify the user of the terminal according to the connection parameters.

4. Method according to any one of Claims 1 to 3, comprising, before the transmission (P9) of the response (REPt) incorporating the help to the terminal (T), a modification (P7) of resource locator addresses included in the response (REP) in order for the resource location addresses to include an address of the help means (SA).

5. Method according to any one of Claims 1 to 4, according to which each transaction incorporated in the response (REPt) transmitted to the user terminal (T) is in the form of a message and a resource location address (URL) comprising the address of the help means (SA) and the identifier (EID) of a respective step.

6. Method according to any one of Claims 1 to 5, according to which several applications each including at least one action are implemented in the server means (SBV₁ - SBV_{I}) and the step identifiers (EID) are respectively associated with application addresses in the help means (SA), the transmitted request (REQt) including the address of the respective application which executes the action associated with the identifier (EID) of the step.

7. Method according to Claim 6, according to which the server means comprises several servers (SBV₁ - SBV_{I}) among which the applications are divided.

8. Method according to Claim 7, according to which each server (SBV₁ - SBV_{I}) includes the functionalities of the help means (SA).

9. Help means (SA) for inserting help for a user in responses (REP) from several applications implemented in a server means (SBV₁ - SBV_{I}) to successive requests (REQ) transmitted by a user terminal (T) through a telecommunication network (RA, RP), comprising:
a means (MT, TA3) for storing a user identifier (UID) and an identifier (EID) of an application step extracted from a request (REQ) transmitted by the user terminal and designating an action requested by the user to be executed by the respective one of the applications in the server means (SBV₁ - SBV_{I}), the request (REQt) being transmitted to the respective application which executes the required action associated with the identifier (EID) of the step and generates a response (REP) transmitted to the help means,
a means (MA, TA2, TA6) for analysing lists of actions previously requested by the user in order to recommend, in the applications, a list of actions respectively associated with step identifiers and store it (P53) in relation to the user identifier, and
a means (MR, MG) for incorporating help including the list of recommended actions in the response (REPt) which is transmitted to the user terminal in order for the user to select another action from the list of recommended actions.

10. Help means according to Claim 9, **characterized in that** the server means (SBV₁ - SBV_{I}) comprises several servers (SBV₁ - SBV_{I}) in which several applications, each including at least one action, are distributed, and **in that** it comprises a means (TA6) listing all the existing steps in the applications to match each identifier (EID) of a step in an application to an address of said step in the application as a function of an address of the server implementing said application.

11. Computer program comprising program instructions suitable for implementing a method according to any one of Claims 1 to 8, when said program is loaded and run in a computer system.

## Patentansprüche

1. Verfahren zum Einfügen einer Hilfe für einen Benutzer in Antworten (REP) von mehreren in einer Servereinrichtung (SBV₁ - SBV_{I}) implementierten Anwendungen auf aufeinander folgenden Anfragen (REQ), die von einem Benutzerterminal (T) über ein Telekommunikationsnetz (RA, RP) übertragen werden, das in einem mit dem Benutzerterminal verbundenen Hilfsmittel (SA) die folgenden Phasen eines wiederholten Anwendungsschritts nach Empfang einer Anfrage (REQ) aufweist:
Speicherung (P4) einer Kennung (UID) des Benutzers und einer Kennung (EID) des Schritts, die aus der Anfrage entnommen werden, die eine vom Benutzer angeforderte Aktion bezeichnet, die von einer der Anwendungen in der Servereinrichtung (SBV₁ - SBV_{I}) ausgeführt werden soll,
Analyse (P51) der Listen von Aktionen, die vorher vom Benutzer gefordert wurden, um in den Anwendungen eine Liste von Aktionen zu empfehlen (P52), die jeweils Schrittkennungen zugeordnet sind, und sie entsprechend der Benutzerkennung (UID) zu speichern (P53),
Übertragung (P64) der Anfrage (REQt) an die jeweilige Anwendung, die die der Kennung (EID) des Schritts zugeordnete geforderte Aktion ausführt und eine Antwort (REP) erarbeitet, die an das Hilfsmittel übertragen wird,
Einfügung (P8) einer Hilfe, die die Liste von empfohlenen Aktionen enthält, in die Antwort, und
Übertragung (P9) der die Hilfe aufnehmenden Antwort (REPt) an das Benutzerterminal, damit der Benutzer eine andere Aktion in der Liste von empfohlenen Aktionen auswählt.

2. Verfahren nach Anspruch 1, gemäß dem die Analyse (P51) der Listen von vorhergehenden vom Benutzer geforderten Aktionen ebenfalls von einem Profil des Benutzers abhängt, das im Hilfsmittel (SA) voreingespeichert ist.

3. Verfahren nach Anspruch 1 oder 2, das vor der Übertragung (P64) der Anfrage eine Auswahl (P62) von Verbindungsparametern, die für die jeweilige Anwendung spezifisch sind und vorher im Hilfsmittel (SA) gespeichert wurden, und eine Einfügung (P63) der Verbindungsparameter in die Anfrage (REQt) aufweist, die an die jeweilige Anwendung übertragen wird, damit diese den Benutzer des Terminals in Abhängigkeit von den Verbindungsparametern identifiziert.

4. Verfahren nach einem der Ansprüche 1 bis 3, das vor der Übertragung (P9) der die Hilfe aufnehmenden Antwort (REPt) an das Terminal (T) eine Veränderung (P7) von in der Antwort (REP) enthaltenen Adressen der Ressourcenlokalisierung aufweist, damit die Adressen der Ressourcenlokalisierung eine Adresse des Hilfsmittels (SA) enthalten.

5. Verfahren nach einem der Ansprüche 1 bis 4, gemäß dem jede in die an das Benutzerterminal (T) übertragene Antwort (REPt) eingefügte Aktion in Form eines Texts und einer Adresse einer Ressourcenlokalisierung (URL) vorliegt, die die Adresse des Hilfsmittels (SA) und die Kennung (EID) eines jeweiligen Schritts enthält.

6. Verfahren nach einem der Ansprüche 1 bis 5, gemäß dem mehrere Anwendungen, die je mindestens eine Aktion enthalten, in der Servereinrichtung (SBV₁ - SBV_{I}) implementiert werden, und die Schrittkennungen (EID) je Anwendungsadressen im Hilfsmittel (SA) zugeordnet werden, wobei die übertragene Anfrage (REQt) die Adresse der jeweiligen Anwendung enthält, die die der Kennung (EID) des Schritts zugeordnete Aktion ausführt.

7. Verfahren nach Anspruch 6, gemäß dem die Servereinrichtung mehrere Server (SBV₁ - SBV_{I}) aufweist, in denen die Anwendungen verteilt sind.

8. Verfahren nach Anspruch 7, gemäß dem jeder Server (SBV₁ - SBV_{I}) Funktionalitäten des Hilfsmittels (SA) aufweist.

9. Hilfsmittel (SA) zur Einfügung einer Hilfe für einen Benutzer in Antworten (REP) von mehreren in einer Servereinrichtung (SBV₁ - SBV_{I}) implementierten Anwendungen auf aufeinander folgenden Anfragen (REQ), die von einem Benutzerterminal (T) über ein Telekommunikationsnetz (RA, RP) übertragen werden, das aufweist:
ein Mittel (MT, TA3) zum Speichern einer Kennung (UID) des Benutzers und einer Kennung (EID) eines Anwendungsschritts, die aus einer Anfrage (REQ) entnommen werden, die vom Benutzerterminal übertragen wird und eine vom Benutzer geforderte Aktion bezeichnen, die von einer der Anwendungen in der Servereinrichtung (SBV₁ - SBV_{I}) ausgeführt werden soll, wobei die Anfrage (REQt) an die jeweilige Anwendung übertragen wird, die die der Kennung (EID) des Schritts zugeordnete geforderte Aktion ausführt und eine Antwort (REP) erarbeitet, die an das Hilfsmittel übertragen wird,
ein Mittel (MA, TA2, TA6), um Listen von Aktionen zu analysieren, die vorher vom Benutzer angefordert wurden, um in den Anwendungen eine Liste von Aktionen zu empfehlen, die jeweils Schrittkennungen zugeordnet sind, und sie entsprechend der Benutzerkennung zu speichern (P53), und
ein Mittel (MR, MG), um eine Hilfe, die die Liste von empfohlenen Aktionen enthält, in die Antwort (REPt) einzufügen, die an das Benutzerterminal übertragen wird, damit der Benutzer eine andere Aktion aus der Liste von empfohlenen Aktionen auswählt.

10. Hilfsmittel nach Anspruch 9, **dadurch gekennzeichnet, dass** die Servereinrichtung (SBV₁ - SBV_{I}) mehrere Server (SBV₁ - SBV_{I}) aufweist, in denen mehrere Anwendungen, die je mindestens eine Aktion enthalten, verteilt sind, und dass es ein Mittel (TA6) aufweist, das alle in den Anwendungen existierenden Schritte auflistet, um jede Kennung (EID) eines Schritts in einer Anwendung einer Adresse des Schritts in der Anwendung in Abhängigkeit von einer Adresse des die Anwendung implementierenden Servers entsprechen zu lassen.

11. Computerprogramm, das Programmbefehle enthält, die an die Anwendung eines Verfahrens nach einem der Ansprüche 1 bis 8 angepasst sind, wenn das Programm in ein Informatiksystem geladen und dort ausgeführt wird.
